# EUROPEAN PATENT APPLICATION

(11) **EP 2 887 290 A1**
(43) Date of publication of application: **24.06.2015**
(21) Application number: 14198484.9
(22) Date of filing: 17.12.2014
(51) Int. Cl.: G06Q 20/02, G06Q 20/32

(54) **Electronic transaction between a mobile device, a touch panel device and a server**

(30) Priority: 20.12.2013 US 201361918768 P; 12.12.2014 US 201414568553
(71) Applicant: MediaTek, Inc, Hsin-Chu 300 (TW)
(72) Inventor: Kuo, Chung-Jen, 300 Hsin-Chu City (TW)
(74) Representative: Goddar, Heinz J.

(57) **Abstract**

A mobile device including a wireless communication unit, a touch panel including a transmitting electrode and a processing unit is provided. The wireless communication unit is configured to transmit a transaction request to a server and receive transaction data from the server. The transmitting electrode is configured to transmit payer data to a receiving electrode of a touch panel device. The processing unit is configured to process a signature on the touch panel to get a signature characteristic, generate payer data according to the signature characteristic and the transaction data, and provide the payer data to the touch panel. The payer data is forwarded to the server by the touch panel device and, when the payer data passes verification by the server, the transaction request is approved.

## Description

### CROSS REFERENCE TO RELATED APPLICATIONS

This Application claims priority of U.S. Provisional Application No. 61/918,768, filed on December 20, 2013, the entirety of which is incorporated by reference herein.

### Field of the Invention

The invention relates to electronic transaction techniques, and more precisely, to methods and devices for electronic transaction between a mobile device, a touch panel device and a server using signature verification.

### Description of the Related Art

NFC (Near Field Communication) is a contactless identification and interconnection technology, which allows users to intuitively exchange information and access content and services among mobile devices, consumer electronics, personal computers, or intelligent electronic devices using methods of near magnetic field communication, such as using 13.56MHz of near magnetic field communication.

Since the market demand for integrated NFC in handheld devices such as mobile phones is mature, NFC now supports mobile payment or can act as a point-of-sale (POS) system. However, since NFC is established based on magnetic fields to transmit and receive signals, it is necessary to install inductive card readers or some components with a similar function in handheld devices or mobile phones to support NFC, which causes the handheld devices to become bigger and is a limitation to the layout structure and component material of the mobile phones and other handheld devices.

Along with the development of touch-sense technology, touch-control panel devices have become popular. In an application of touch-sense technology, a touch-control panel device can detect and respond to physical contact by a user. Besides the touch-sense technology, there is a "touch link technology" that was recently developed for a touch-control panel devices, such as that recited in patent applications US 2011/0304583, US 2013/0147760, and CN 102916729A, which implements near field wireless communication by trying to utilize the existing touch-control panel and the corresponding hardware devices. Generally, a touch-control panel device includes a touch panel, a signal processing circuit and a central processing unit (CPU). For example, the touch-control panel device may contain a touch pad without display functionality or a touch screen with display functionality. The touch-control panel device may include a touch sensor. The touch sensor includes a plurality of driving electrodes and a plurality of sensing electrodes on a substrate. The touch-control panel device is usually implemented by coating Indium Tin Oxide (ITO) materials on a dielectric such as glass. The signal processing circuit is usually implemented in an integrated circuit (IC). The signal processing circuit provides two main functions. One is performing analog-to-digital conversion, demodulation, or other signal processing procedures on the analog signals received from the touch panel, and then transmitting the processed signals to the CPU. Another is receiving digital signals from the CPU, performing modulation, digital-to-analog conversion, or other signal processing procedures on the received digital signals and then transmitting the processed signals to the touch panel. In an application of touch-sense technology, when user touches the touch-control panel device with his finger or a stylus, corresponding analog signals are generated by touching the driving electrodes and sensing electrodes via the touch sensor. The signals are transmitted to the CPU after being processed by the signal processing circuit. The CPU calculates the position where the user touches via proper algorithm(s) and responds to the contact made by the user. In the application of touch link technology, the driving electrode and/or the sensing electrode can act as a transmitting electrode for transmitting signals, and the driving electrode and/or the sensing electrode can act as a receiving electrode for receiving signals. When transmitting signals, a touch-control panel device can modulate and process the signal to be transmitted by the signal processing circuit, and transmit the processed signals to another touch-control panel device via the transmitting electrode by electric field coupling. The receiving electrode of the another touch-control panel device receives the transmitted signal. When receiving signals, a touch-control panel device can receive a signal via the receiving electrode by electric field coupling, demodulate the signals by the signal processing circuit, and then transmit the processed signal to the processor for further processing. Therefore, the signals can be transmitted and received by using the original electrodes to realize touch transmission based on electric fields without an inductive card reader or components with a similar function being incorporated. Compared to the conventional NFC technology, the touch link technology reduces both volume and cost. This is because some of the existing hardware may be reused. For system developers, the additional effort may be some software and/or firmware revision and porting so as to enable the existing hardware support touch link technology. For example, a protocol may be needed when using touch link technology to transmit and/or receive data; the software may be modified to implement the protocol. Of course, touch link technology also works when not using the existing hardware such as the existing touch-control panel device, but when using another touch-control panel and the signal processing circuit to realize touch link technology. In addition, in an application of the touch sense technology, there are two common types of touch-control panel device, including the capacitive touch and resistive touch. For the applications of touch link technology, besides the capacitive type of touch-control panel device, the resistive type of touch-control panel device can also be used to realize the touch link technology.

With the increasing growth and development of applications, the opportunity for users to access information through a network has been significantly increased. A user may utilize various electronic devices, such as computer systems, portable devices and so on, to perform a large number of services and applications through the network. A payer may often pay money to a payee by using a credit card or by a bank account transfer. Using a credit card means that the payer may have to provide his/her card number to the payee, and the card number may be disclosed and used by unauthorized persons. To prevent personal data, such as a credit card number or the details of operations, from being tampered with or stolen by unauthorized persons, enhancements in security strategies for electronic transaction between the server and the clients are required. It is therefore desirable to provide a method and system capable of ensuring that electronic transaction data transmitted between the server and the clients are correct and are being protected when any operation is performed between the server and the clients.

### BRIEF SUMMARY OF THE INVENTION

In a first aspect of the invention, a mobile device is provided. The mobile device comprises a wireless communication unit, a touch panel comprising a transmitting electrode and a processing unit. The wireless communication unit is configured to transmit a transaction request to a server and receive transaction data from the server. The transmitting electrode is configured to transmit payer data to a receiving electrode of a touch panel device. The processing unit is configured to process a user's signature on the touch panel to get a signature characteristic, generate the payer data according to the signature characteristic and the transaction data, and provide the payer data to the touch panel. The payer data is forwarded to the server by the touch panel device and, when the payer data passes verification by the server, the transaction request is approved.

In a second aspect of the invention, a non-transitory computer readable storage medium is provided. The non-transitory computer readable storage medium has instructions stored therein, which when executed by a mobile device, cause the mobile device to: transmit, at a wireless communication unit, a transaction request to a server; receive, at the wireless communication unit, a transaction data from the server; prompt, at a processing unit, a user to sign on a touch panel to obtain a signature characteristic; generate, at the processing unit, payer data according to the signature characteristic and the transaction data; provide, at the processing unit, the payer data to the touch panel; and transmit, at a transmitting electrode of the touch panel, the payer data to a receiving electrode of a touch panel device. The payer data is further forwarded to the server by the touch panel device and, when the payer data passes verification of the server, the transaction request is approved.

In a third aspect of the invention, a non-transitory computer readable storage medium is provided. The non-transitory computer readable storage medium has instructions stored therein, which when executed by a server, cause the server to: receive, at a wireless communication unit, a transaction request from a mobile device; generate, at a processing unit, a transaction data according to some transaction specific data; transmit, at the processing unit, the transaction data to the mobile device; receive, at the wireless communication unit, payer data from a touch panel device; and verify, at the processing unit, the payer data so as to determine whether to approve the transaction request.

In a fourth aspect of the invention, an electronic transaction method executed by a mobile device comprising a wireless communication unit, a touch panel, and a processing unit is provided. The electronic transaction method comprises the steps of:
transmitting, at the wireless communication unit, a transaction request to a server; receiving, at the wireless communication unit, a transaction data from the server; prompting, at the processing unit, a user to sign on a touch panel to obtain a signature characteristic; generating, at the processing unit, payer data according to the signature characteristic and the transaction data; providing, at the processing unit, the payer data to the touch panel; and transmitting, at a transmitting electrode of the touch panel, the payer data to a receiving electrode of a touch panel device, wherein the payer data is forwarded to the server by the touch panel device and, when the payer data passes verification by the server, the transaction request is approved.

Other aspects and features of the present invention will become apparent to those with ordinary skill in the art upon review of the following descriptions of specific embodiments of the non-transitory computer readable storage mediums, mobile device and server for carrying out the electronic transaction method.

### BRIEF DESCRIPTION OF THE DRAWINGS

The invention can be more fully understood by reading the subsequent detailed description and examples with reference to the accompanying drawings, wherein:
Fig. 1 is a schematic diagram of an electronic transaction system according to an embodiment of the invention;
Fig. 2 is a block diagram illustrating a mobile device supporting touch-link technology according to an embodiment of the invention;
Fig. 3 is a block diagram illustrating a touch panel device supporting touch-link technology according to an embodiment of the invention;
Fig. 4 is a block diagram illustrating a server according to an embodiment of the invention; and
Fig. 5A and Fig. 5B show a flow chart of the electronic transaction method according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

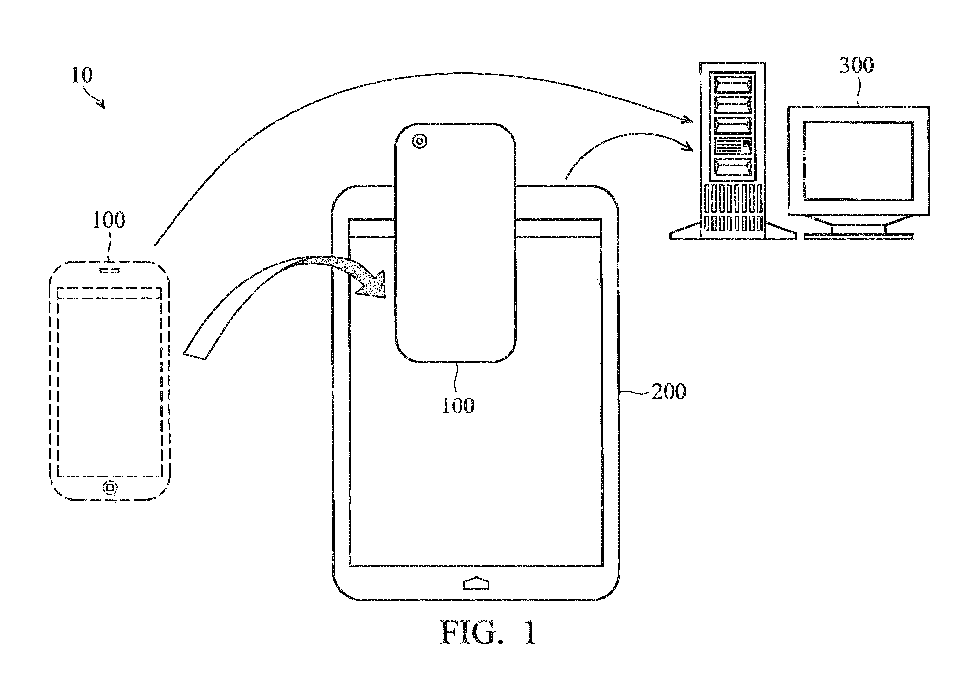

Fig. 1 is a schematic diagram of an electronic transaction system according to an embodiment of the invention. The electronic transaction system 10 comprises a mobile device 100, a touch panel device 200 and a server 300, wherein the mobile device 100 may be a mobile phone, a smartphone, a Portable Media Player (PMP), a handheld gaming console, or a smart accessory (e.g., smart watch or smart glasses), and the touch panel device 200 may be a desktop computer, an All-In-One (AIO) computer, an Automatic Teller Machine (ATM), an information kiosk, a panel Personal Computer (PC), a tablet computer, or a notebook. Each of the mobile device 100 and the touch panel device 200 is equipped with a touch panel for providing a touch-based user interface which can detect and respond to physical contact by a user. In addition, when their touch panels approach each other, the mobile device 100 can be configured to transmit signals to the touch panel device 200 via the transmitting electrode(s) and receiving electrode(s) of their touch panels based on the touch link technology. As shown in Fig. 1, the mobile device 100 can be turned over and moved to the touch panel device 200, so that their touch panels face each other in proximity or are in contact with each other.

The touch link technology provides near field wireless communication via the touch panel. Generally, a touch panel may include a plurality of driving electrodes and a plurality of sensing electrodes on a substrate. When providing the touch-sensing functionality, the driving electrodes and sensing electrodes may generate a signal in response to an approximation or a contact of an object, such as user's finger or a stylus, and the signal may be processed and calculated to derive the position of the detected approximation or contact of the object. When providing touch-link functionality, at least one of the driving electrodes and/or the sensing electrodes may act as transmitting electrode(s) for transmitting signals to another touch-sensitive device by electric field coupling, and at least one of the driving electrodes and the sensing electrodes may act as receiving electrode(s) for receiving signals from another touch-sensitive device by electric field coupling. Therefore, the signals can be transmitted and received by using the original electrodes of the touch panel to realize signal transmission through electric field coupling without an inductive card reader or components with a similar function being incorporated.

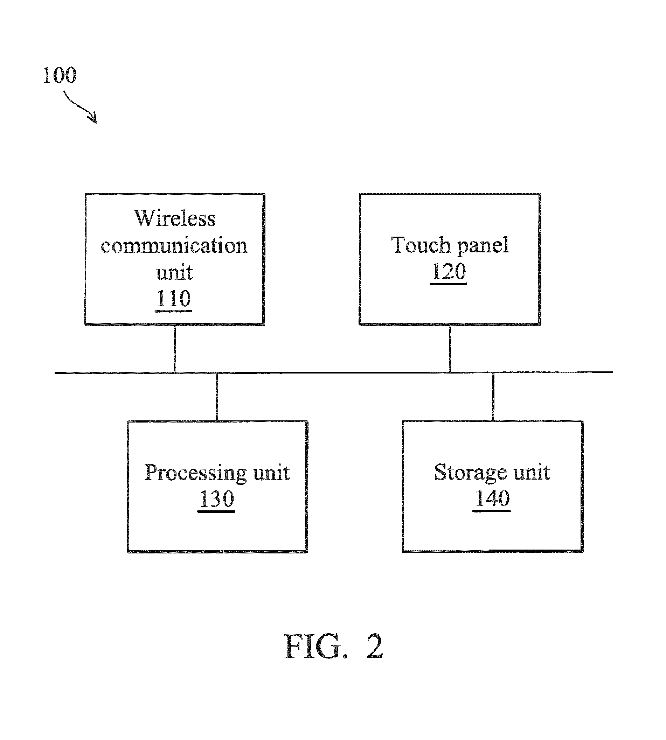

Fig. 2 is a block diagram illustrating the functional units of the mobile device 100 according to an embodiment of the invention. The mobile device 100 comprises a wireless communication unit 110, a touch panel 120, a processing unit 130, and a storage unit 140. The wireless communication unit 110 is responsible for providing the function of wired or wireless network access, so that the mobile device 100 may connect to the Internet or a particular server set up on the Internet, such as the server 300. The wired network access may include an Ethernet connection, an Asymmetric Digital Subscriber Line (ADSL), a cable connection, or the like. The wireless network access may include a connection to a Wireless Local Area Network (WLAN), a WCDMA system, a Code Division Multiple Access 2000 (CDMA-2000) net system work, a Time Division-Synchronous Code Division Multiple Access (TD-SCDMA) system, a Worldwide Interoperability for Microwave Access (WiMAX) system, a Long Term Evolution (LTE) system, an LTE Advanced (LTE-A) system, or a Time- Division LTE (TD-LTE) system. The wireless communication unit 110 may comprise a Radio Frequency (RF) unit and a Baseband unit. Specifically, the Baseband unit may contain multiple hardware devices to perform baseband signal processing, including ADC/DAC, gain adjusting, modulation/demodulation, encoding/decoding, and so on, while the RF unit may receive RF wireless signals, convert the received RF wireless signals to baseband signals, which are processed by the Baseband unit, or receive baseband signals from the baseband unit and convert the received baseband signals to RF wireless signals, which are transmitted later. The RF unit may also contain multiple hardware devices to perform radio frequency conversion, such as a mixer for multiplying the baseband signals with a carrier oscillated in the radio frequency of the wireless communications system, wherein the radio frequency may be 2.4GHz or 5GHz utilized in the Wireless-Fidelity (WiFi) technology, or may be 2.402~2.480GHz utilized in the Bluetooth technology, or others depending on the wireless technology in use. To be more specific, the mobile device 100 may connect to the server 300 via the wireless communication unit 110 for transmitting data to or receiving data from the server 300. For example, the mobile device 100 may transmit a transaction request to the server 300 and receive transaction data from the server 300 via the wireless communication unit 110.

The touch panel 120 may include a display device, such as a Liquid-Crystal Display (LCD), a Light-Emitting Diode (LED), or an Electronic Paper Display (EPD), for providing the display function. In order to provide the touch-sensing functionality, the touch panel 120 further includes one or more driving electrodes and sensing electrodes for detecting contact or proximity of objects (e.g., a finger or touch pen) thereon, thereby providing a touch-based user interface. Moreover, in order to provide the touch link functionality, at least one of the driving electrodes and/or the sensing electrodes may be configured to act as transmitting electrode(s) for transmitting signals to another touch-sensitive device by electric field coupling, and at least one of the driving electrodes and/or the sensing electrodes may be configured to act as receiving electrode(s) for receiving signals from another touch-sensitive device by electric field coupling, so that the mobile device 100 can exchange data with another touch-sensitive device, e.g., the touch panel device 200, via the transmitting electrode(s) and receiving electrode(s). In one embodiment, the touch panel 120 may be implemented with Indium Tin Oxide (ITO) materials.

The processing circuit 130 may include a processor and a signal processing circuit. The processor may be a Central Processing Unit (CPU), Micro-Control Unit (MCU), Digital Signal Processor (DSP), or the like, which provides the function of data processing and computing. The signal processing circuit may include an Analog-to-Digital Conversion (ADC) circuit, a demodulation circuit, a Digital-to-Analog Conversion (DAC) circuit, and a modulation circuit. The first function of the signal processing circuit is to perform ADC and demodulation on the analog signals received from the touch panel 120, and then send the digital signals to the processor. The second function of the signal processing circuit is to perform modulation and DAC on the digital signals received from the processor, and then send the analog signals to the touch panel 120. For implementation, the processor and the signal processing circuit may be incorporated into a single Integrated Circuit (IC), or they may be realized with two separate ICs. More particularly, the processing unit 130 may load and execute a series of instructions and/or program codes from the storage unit 140 to control the operation of the wireless communication unit 110, the touch panel 120, and the processing unit 130, and transmit a transaction request to the server 300 and obtain a signature from the user of the mobile device 100 on the touch panel 120, for performing the electronic transaction method of the invention, including processing the user's signature on the touch panel 120 to get a signature characteristic, generating payer data according to the signature characteristic and the transaction data, and providing the payer data to the touch panel 120.

The transaction request may include information about a bank account and a password of the user of the mobile device 100 and an amount of money to be paid so that the sever 300 can know which account is relevant to the transaction. In some embodiments, if the transaction request does not include the above-mentioned information, it may be that the user of the mobile device 100 has already provided this information in advance. In some embodiments, further information regarding the touch panel device 200 such as a seller identification number may be provided to the server 300 so that the server 300 may dynamically generate transaction data based on the information provided.

The processing unit 130 may process the user's signature which the user signed on the touch panel 120 to obtain the signal characteristic of the user's signature, wherein the signal characteristic may comprise data related to the user's signature, such as track, speed, stroke or strength of the user's signature. To be more specific, the signal processing circuit of the processing unit 130 may prompt the user to sign on the touch panel 120 to obtain the user's signature and process the user's signature to obtain the signal characteristic of the user's signature. In some embodiments, the payer data may be generated by directly performing modulation and DAC on the digital signals, i.e. the signature characteristic and the transaction data, to generate the analog signals and the analog signals are then sent to the touch panel 120. In some embodiments, if a first key for encryption is provided by the server 300, the payer data may be generated by encrypting the signature characteristic and the transaction data to generate encrypted data and performing modulation and DAC on the encrypted data to generate the analog signals. The analog signals are then sent to the touch panel 120.

The storage unit 140 may be a non-volatile storage medium (e.g., Read-Only Memory (ROM), Flash memory, magnetic tape, hard disk, or optical disc), or a volatile storage medium (e.g., Random Access Memory (RAM)), or any combination thereof for storing data, such as instructions, program codes, and input data from users.

Although they are not shown, the mobile device 110 may further comprise other functional units, such as an Input/Output (I/O) device, e.g., button, keyboard, or mouse, etc., and the invention is not limited thereto.

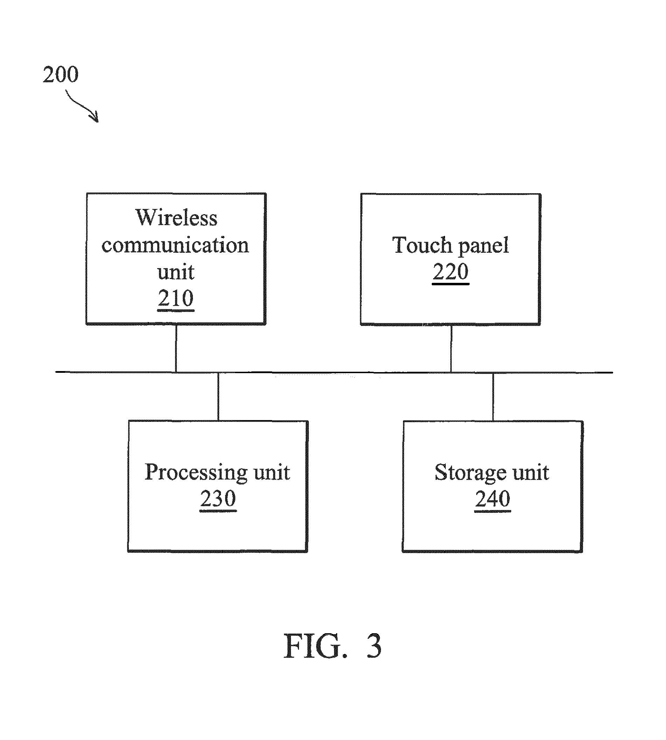

Fig. 3 is a block diagram illustrating the functional units of the touch panel device 200 according to an embodiment of the invention. The touch panel device 200 comprises a wireless communication unit 210, a touch panel 220, a processing unit 230, and a storage unit 240. Similar to the touch panel 120, the touch panel 220 also comprises a display device, such as a Liquid-Crystal Display (LCD), a Light-Emitting Diode (LED), or an Electronic Paper Display (EPD), for providing the display functionality, and one or more driving electrodes and sensing electrodes for providing the touch-sensing functionality, wherein the driving electrodes and sensing electrodes may further be configured to act as transmitting electrodes and receiving electrodes for providing the touch link functionality. Specifically, the signal transmission and reception using the touch link technology are performed by electric field coupling between the transmitting electrode(s) of one touch-sensitive device and the receiving electrode(s) of another touch-sensitive device. That is, the touch panel device 200 can exchange data with another touch-sensitive device, e.g., the mobile device 100, via the transmitting electrode(s) and receiving electrode(s). In one embodiment, the touch panel 220 may be implemented with ITO materials.

The wireless communication unit 210 is responsible for providing the function of wired or wireless network access, so that the touch panel device 200 may connect to the Internet or a particular server set up on the Internet, such as the server 300. The wired network access may include an Ethernet connection, an Asymmetric Digital Subscriber Line (ADSL), a cable connection, or the like. The wireless network access may include a connection to a Wireless Local Area Network (WLAN), a WCDMA system, a Code Division Multiple Access 2000 (CDMA-2000) net system work, a Time Division-Synchronous Code Division Multiple Access (TD-SCDMA) system, a Worldwide Interoperability for Microwave Access (WiMAX) system, a Long Term Evolution (LTE) system, an LTE Advanced (LTE-A) system, or a Time- Division LTE (TD-LTE) system. The wireless communication unit 210 may comprise a Radio Frequency (RF) unit and a Baseband unit. Specifically, the Baseband unit may contain multiple hardware devices to perform baseband signal processing, including ADC/DAC, gain adjusting, modulation/demodulation, encoding/decoding, and so on, while the RF unit may receive RF wireless signals, convert the received RF wireless signals to baseband signals, which are processed by the Baseband unit, or receive baseband signals from the baseband unit and convert the received baseband signals to RF wireless signals, which are transmitted later. The RF unit may also contain multiple hardware devices to perform radio frequency conversion, such as a mixer for multiplying the baseband signals with a carrier oscillated in the radio frequency of the wireless communications system, wherein the radio frequency may be 2.4GHz or 5GHz utilized in the Wireless-Fidelity (WiFi) technology, or may be 2.402~2.480GHz utilized in the Bluetooth technology, or others depending on the wireless technology in use. To be more specific, the touch panel device 200 may connect to the server 300 via the wireless communication unit 210 for transmitting data to or receiving data from the server 300. For example, the touch panel device 200 may transmit a payer data received from the mobile device 100 to the server 300 and receive a transaction result indication from the server 300 via the wireless communication unit 210.

The processing circuit 230 may include a processor and a signal processing circuit. The processor may be a Central Processing Unit (CPU), Micro-Control Unit (MCU), Digital Signal Processor (DSP), or the like, which provides the function of data processing and computing. The signal processing circuit may include an Analog-to-Digital Conversion (ADC) circuit, a demodulation circuit, a Digital-to-Analog Conversion (DAC) circuit, and a modulation circuit. The first function of the signal processing circuit is to perform ADC and demodulation on the analog signals received from the touch panel 220, and then send the digital signals to the processor. The second function of the signal processing circuit is to perform modulation and DAC on the digital signals received from the processor, and then send the analog signals to the touch panel 220. For implementation, the processor and the signal processing circuit may be incorporated into a single Integrated Circuit (IC), or they may be realized with two separate ICs. More particularly, the processing unit 230 may load and execute a series of instructions and/or program codes from the storage unit 240 to control the operation of the wireless communication unit 210, the touch panel 220, and the processing unit 230, and receive payer data from the mobile device 100, for performing the electronic transaction method of the invention, including receiving the payer data from a receiving electrode of the touch panel 220 and transmitting the payer data to the server 300 for verification.

The storage unit 240 may be a non-volatile storage medium (e.g., Read-Only Memory (ROM), Flash memory, magnetic tape, hard disk, or optical disc), or a volatile storage medium (e.g., Random Access Memory (RAM)), or any combination thereof for storing data, such as instructions, program codes, and input data from users.

Although not shown, the touch panel device 200 may further comprise other functional units, such as an Input/Output (I/O) device, e.g., button, keyboard, or mouse, etc., and the invention is not limited thereto.

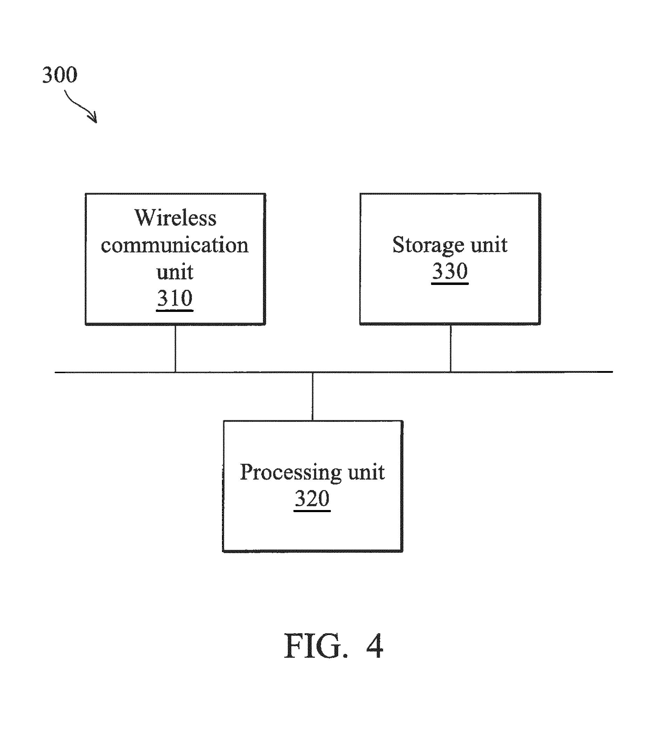

Fig. 4 is a block diagram illustrating the functional units of the server 300 according to an embodiment of the invention. The server 300 comprises a wireless communication unit 310, a processing unit 320, and a storage unit 330.

The wireless communication unit 310 is responsible for providing the function of wired or wireless network access, so that the mobile device 100 and the touch panel device 200 may connect to the server 300. The wired network access may include an Ethernet connection, an Asymmetric Digital Subscriber Line (ADSL), a cable connection, or the like. The wireless network access may include a connection to a Wireless Local Area Network (WLAN), a WCDMA system, a Code Division Multiple Access 2000 (CDMA-2000) net system work, a Time Division-Synchronous Code Division Multiple Access (TD-SCDMA) system, a Worldwide Interoperability for Microwave Access (WiMAX) system, a Long Term Evolution (LTE) system, an LTE Advanced (LTE-A) system, or a Time- Division LTE (TD-LTE) system. The wireless communication unit 310 may comprise a Radio Frequency (RF) unit and a Baseband unit. Specifically, the Baseband unit may contain multiple hardware devices to perform baseband signal processing, including ADC/DAC, gain adjusting, modulation/demodulation, encoding/decoding, and so on, while the RF unit may receive RF wireless signals, convert the received RF wireless signals to baseband signals, which are processed by the Baseband unit, or receive baseband signals from the baseband unit and convert the received baseband signals to RF wireless signals, which are transmitted later. The RF unit may also contain multiple hardware devices to perform radio frequency conversion, such as a mixer for multiplying the baseband signals with a carrier oscillated in the radio frequency of the wireless communications system, wherein the radio frequency may be 2.4GHz or 5GHz utilized in the Wireless-Fidelity (WiFi) technology, or may be 2.402~2.480GHz utilized in the Bluetooth technology, or others depending on the wireless technology in use. To be more specific, the server 300 may connect to the touch panel device 200 and the mobile device 100 via the wireless communication unit 310 for transmitting data to or receiving data from them. For example, the server 300 receives a transaction request from the mobile device 100, generates transaction data according to some transaction-specific data, transmits the transaction data to the mobile device 100, receives the payer data from a touch panel device, and verifies the payer data so as to determine whether to approve the transaction request. The transaction-specific data may include date and location where the transaction is taken place, or information regarding the touch panel device 200.

The processing unit 320 may include a processor. The processor may be a Central Processing Unit (CPU), Micro-Control Unit (MCU), Digital Signal Processor (DSP), or the like, which provides the function of data processing and computing. More particularly, the processing unit 320 may load and execute a series of instructions and/or program codes from the storage unit 330 to control the operation of the wireless communication unit 310 and the processing unit 320, and receive a transaction request from the mobile device 100, for performing the electronic transaction method of the invention, including generating transaction data according to some transaction-specific data, transmitting the transaction data to the mobile device 100, receiving the payer data from the touch panel device 200 and verifying the payer data so as to determine whether to approve the transaction request.

The storage unit 330 may be a non-volatile storage medium (e.g., Read-Only Memory (ROM), Flash memory, magnetic tape, hard disk, or optical disc), or a volatile storage medium (e.g., Random Access Memory (RAM)), or any combination thereof for storing data, such as instructions, program codes, user signatures from users.

Although not shown, the server 300 may further comprise other functional units, such as an Input/Output (I/O) device, e.g., button, keyboard, or mouse, etc., and the invention is not limited thereto.

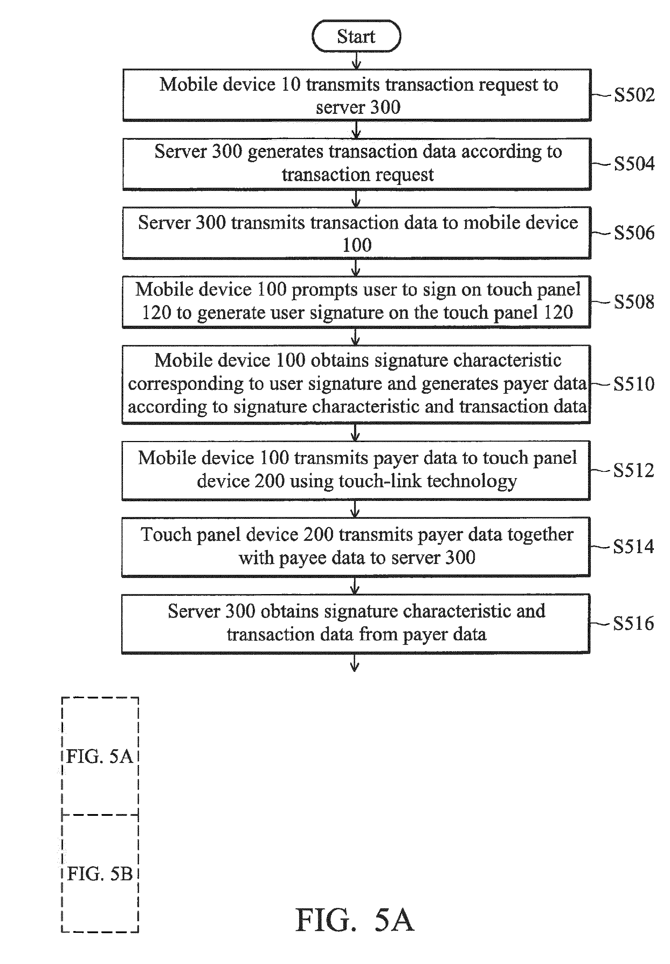

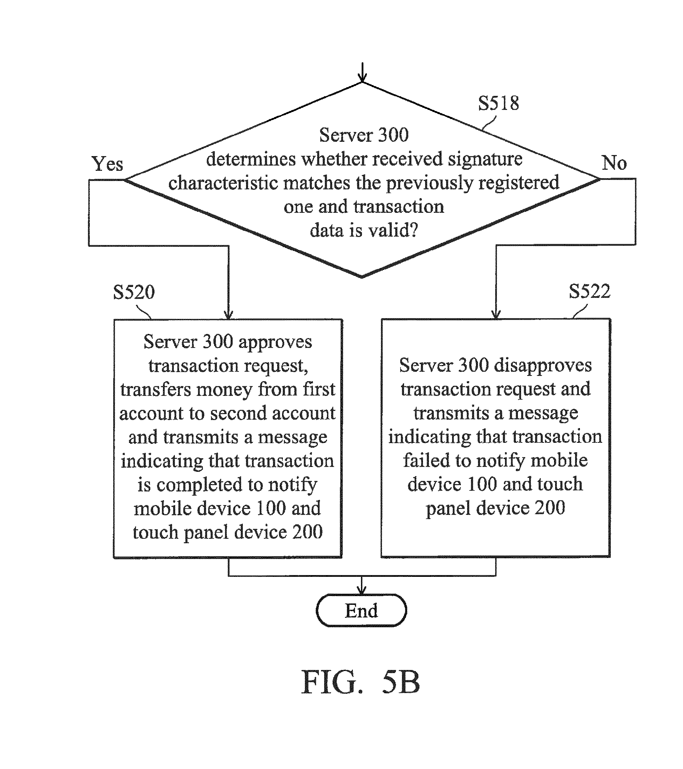

Fig. 5A and Fig. 5B (together reference to be Fig. 5) show a flow chart of the electronic transaction method according to an embodiment of the invention. In this embodiment, the electronic transaction method is in use between the mobile device 100, the touch panel device 200 and the server 300. Particularly, the mobile device 100 and the touch panel device 200 both support the touch-link technology that enables exchange of information therebetween via the transmitting electrodes and the receiving electrodes of the touch panels 120 and 220. The touch panel device 200 is capable of connecting to the server 300 via a wired/wireless network while the mobile device 100 is capable of connecting to the server 300 via a wireless network.

First, when a user requests an electronic transaction with the touch panel device 200 through the server 300 (e.g., pay by a credit card or a bank account), the mobile device 100 transmits a transaction request to the server 300 (step S502). The transaction request may include information about a bank account and a password of the user of the mobile device 100 and an amount of money to be paid so that the sever 300 can know which account is to be transacted. For example, an amount of money, e.g. 100 dollars, is requested to be retrieved from the first account. In addition, the mobile device 100 may connect with the server 300 in advance and the password of the first account may then be entered to the server 300 for registration.

Upon receiving the transaction request, the server 300 generates transaction data according to the transaction request (step S504). The transaction request may include information about a bank account and a password of the user of the mobile device 100 and an amount of money to be paid so that the sever 300 can know which account and how much money is involved in the transaction. In some embodiments, if the transaction request does not include the information mentioned above, it may be because the user of the mobile device 100 has already provided this information to the server 300 in advance. In some embodiments, information regarding the touch panel device 200 may be provided to the server 300 so that the server 300 may dynamically generate transaction data based on the provided information. In one embodiment, the transaction data can be a hash code generated by applying a hash function on some transaction-specific data, wherein the transaction-specific data may include data regarding time, place and shopping store information for this transaction and so on. Hashing is used to encrypt and decrypt digital signatures (used to authenticate message senders and receivers). It is used to ensure that transmitted messages have not been tampered with. The sender generates a hash of the message, encrypts it, and sends it with the message itself. The recipient then decrypts both the message and the hash, produces another hash from the received message, and compares the two hashes. If they're the same, there is a very high probability that the message was transmitted intact. A hash value generated by a specific hash function is irreversible so that information being hashed can be protected. For a given hash, there is no practical way to calculate the original input and thus it is difficult to forge. There are several well-known hash functions used, including the message-digest hash functions MD2, MD4, and MD5, used for hashing digital signatures into a shorter value called a message-digest, and the Secure Hash Algorithm (SHA), a standard algorithm, that makes a larger (60-bit) message digest and is similar to MD4.

For example, the server 300 may set up a first event, wherein the first event contains information pertaining to the first account and the amount of money to be paid. A first hash code is generated by applying a hash function on the data regarding time, place and shopping store information for this transaction as the transaction data and the transaction data is sent to the mobile device 100 by the server 300, wherein the first hash code is valid only for a predefined time, e.g., 2 minutes. For instance, the first hash code is valid if the server 300 later receives it from the touch panel device 200 within 2 minutes and it is invalid if the server 300 does not receive it from the touch panel device 200 within 2 minutes. In one embodiment, the first hash code can be defined, for example, as follows: first hash code = hash (account number, IP address, transaction time, amount of money, signature track).

After the transaction data is generated, the server 300 transmits the transaction data to the mobile device 100 via the wireless communication unit 310 and the mobile device 100 receives the transaction data from the server 300 via the wireless communication unit 110 (step S506).

Thereafter, the mobile device 100 prompts a user to sign on the touch panel 120 so that the user of the mobile device 100 performs a signature operation to generate a user's signature on the touch panel 120 (step S508).

After the user's signature is generated, the processing unit 130 of the mobile device 100 obtains a signature characteristic, which includes signature-related information, corresponding to the user's signature and generates payer data according to the signature characteristic and the transaction data (step S510). The signal characteristic may comprise data related to the user's signature, such as one of a track, a speed, a stroke and a strength of the user's signature. Specially, the mobile device 100 may receive the user's signature generated by the user on the touch panel 120 and then perform ADC and demodulation on the user's signature which are the analog signals received from the touch panel 120 to obtain the at least one of the signature track, signature speed, signature stroke and signature strength generated by the signature operation, so as to obtain the signal characteristic for this user's signature. In other words, the signature characteristic includes not only the trace but also the time which can derive speed and acceleration of the user's signature. The payer data may include the signature characteristic and the transaction data. The payer data may also be obtained by encrypting the signature characteristic and the transaction data using a first key.

Then, the mobile device 100 provides the payer data to the touch panel 120 and transmits the payer data by a transmitting electrode of the touch panel 120 to a receiving electrode of the touch panel device 200 using the touch-link technology (step S512). To be more specific, the mobile device 100 is moved to be close to or in contact with the touch panel device 200, so that the two devices detect each other. That is, the touch panel 120 of the mobile device 100 may detect the contact or proximity of the touch panel device 200, and the touch panel 220 of the touch panel device 200 may detect the contact or proximity of the mobile device 100. For example, when the mobile device 100 and the touch panel device 200 approach each other, the signals generated by the transmitting electrodes of the touch panel 120 can be received by the receiving electrodes of the touch panel 220 through electric field coupling, so that the touch panel device 200 detects contact or proximity of the mobile device 100. "Detect each other" also means that the touch panel 220 of the touch panel device 200 may detect the contact or proximity of the mobile device 100, and the touch panel 120 of the mobile device 100 may detect the contact or proximity of the touch panel device 200.

After receiving the payer data from the mobile device 100, the touch panel device 200 further forwards or transmits the payer data together with a payee data including information about the touch panel device 200, such as a second account corresponding to the touch panel device 200 to be used in the transaction, to the server 300 for verification (step S514). Specifically, the touch panel device 200 receives the encrypted data from the mobile device 100, but the touch panel device 200 does not have the key for decryption. Therefore, the touch panel device 200 does not have knowledge of the first hash code and the signature characteristic and thus the encrypted data will not be disclosed to the touch panel device 200. The server 300 may use the first key to decrypt the payer data sent from the touch panel device 200. After decryption, the server 300 has knowledge of the first hash code and the signature characteristic.

The server 300 may then receive the payer data from the touch panel device 200, and verify the payer data so as to determine whether to approve the transaction request. As illustrated in Fig. 5, subsequent to step S514, the server 300 obtains the signature characteristic and the transaction data from the payer data (step S516) and determines whether the received signature characteristic matches the signature characteristic previously registered with the server 300 by the user of the mobile device 100 and whether the transaction data is valid (step S518). For example, when receiving the data transmitted from the touch panel device 200, the server 300 may parse the received data to obtain the payer data there from so as to determine whether the signature characteristic included in the payer data matches that of the pre-defined user's signature stored in the storage unit 330 and whether the transaction data (i.e. the first hash code) is valid. In one embodiment, the server 300 may further transmit a first key for encryption to the mobile device 100 while transmitting the transaction data and the mobile device 100 may further encrypt the signature characteristic and the transaction data (e.g. the first hash code) with the first key to generate an encrypted data as the payer data. Upon receiving the payer data from the touch panel device 200, the server 300 decrypts the payer data using the first key.

If the two signature characteristics match, verification on the server 300 is successful and other interactions between the mobile device 100 and the touch panel device 200 may take place. Otherwise, if the two signature characteristics do not match, verification on the mobile device 100 fails (step S522). For the server 300, the previously registered signature characteristic may be referred to as the first signature, and the signature characteristic obtained in step S516 may be referred to as the second signature, and the processing unit 320 may determine whether the first signature matches the second signature. The phase "two signatures matching each other" may refer to two signatures being the same (i.e., identical), or two signatures corresponding to the same result (e.g., by applying a mathematical operation on the two signatures).

Specifically, the server 300 determines whether the signature inputted by the mobile device 100 matches with the stored signature (i.e., whether the received data corresponds to the signature stored in the storage unit 330) according to signature characteristics, such as stroke speed, stroke strength, stroke order, stroke curvature, and/or stroke track of the inputted signature and the stored signature. For example, the server 300 may determine a first correlation between the stroke speeds of the inputted signature and the stored signature, a second correlation between the stroke strengths of the inputted signature and the stored signature, a third correlation between the stroke orders of the inputted signature and the stored signature, a fourth correlation between the stroke curvature of the inputted signature and the stored signature, and a fifth correlation between the stroke tracks of the inputted signature and the stored signature. Later, the server 300 may calculate a statistical value (e.g., a weighted sum) of the first, second, third, fourth, and fifth correlations, and if the statistical value is greater than a predetermined threshold, it is determined that the inputted signature matches with the stored signature and thus the verification of the server 300 is passed. In regard to the fact that the user may not input exactly the same signature every time, the setting of the predetermined threshold may be set to tolerate a limited range of lapse for the user to input the signature, so that flexibility of signature recognition may be provided while maintaining security control of the touch panel device 200. Subsequently, the server 300 confirms whether transaction data (e.g. a hash code) transmitted to the mobile device 100 matches the transaction data received from the mobile device 100, and only continues with subsequent step(s) if the two transaction data match. The phase "two transaction data matching each other" may mean that the two transaction data are the same (i.e., identical), or that they correspond to the same result (e.g., by applying a mathematical operation on the two transaction data). For the server 300, the transaction data transmitted to the mobile device 100 may be referred to as the first security code, the transaction data received from the mobile device 100 may be referred to as the second security code, and the processing unit 320 may determine whether the first security code matches the second security code and it is received within the predetermined time. If the first security code matches the second security code and is received within the predetermined time, the server 300 performs step S518 in Fig. 5. In other words, the verification on the mobile device 100 is determined as being passed if the first security code matches the second security code and it is received within the predetermined time.

When the payer data passes verification by the server 300, the server 300 approves the transaction request, transfer money from the first account to the second account and transmits a message indicating that the transaction is completed to notify the mobile device 100 and the touch panel device 200 (step S520). Thus, the server 300 transfers money from the first account of the user of the mobile device 100 to the second account corresponding to the touch panel device 200. The server 300 transmits a message indicating whether a payment to the touch panel device 200 is made by the sever 300. In one embodiment, the server 300 may transmit the message to the touch panel device 200 only and thus the mobile device 100 may receive the message from the touch panel device 200 via the receiving electrode of the touch panel 120. In another embodiment, the server 300 may transmit the message to the mobile device 100 and the touch panel device 200 and thus the mobile device 100 may receive the message from the server 300 directly via the wireless communication unit 110.

In one embodiment, before step S502, the user of the mobile device 100 may operate the mobile device 100 to register his signature characteristic with the server 300 prior to transmitting the transaction request to the server 300, and the server 300 may store the signature characteristic as the verification basis for later (i.e., the comparison of signature characteristic in step S516). To be more specific, prior to transmitting the transaction request to the server 300, the processing unit 130 of the mobile device 100 further processes another signature on the touch panel 120 to get another signature characteristic and the wireless communication unit 110 of the mobile device 100 transmits the another signature characteristic to the server 300 which is stored in the storage unit 330 as the pre-defined user's signature for subsequent signature characteristics matching.

In some embodiments, when the user of the mobile device 100 requests for creating an account on the server 300, the mobile device 100 is requested to register a first password of the account with the server 300, and the server 300 may later request the user to enter a second password during the transaction process. Then, the second password together with the transaction request will be transmitted to the server 300 for verification. The server 300 confirms whether the second password received matches the first password registered, and only generates the hash code and transmits it to the mobile device 100 if the two passwords match.

Therefore, according to the non-transitory computer readable storage mediums, mobile device and server and related electronic transaction method of the invention, the user account of the mobile device is not disclosed to the touch panel device during the transaction, thus providing a highly secure electronic transaction approach. In addition, the signature of the user of the mobile device is requested to ensure transaction safety and signature-related information is not disclosed to the touch panel device. Furthermore, the mobile device and the touch panel device (one belonging to the payer, one belonging to the payee) are placed physically close to each other so as to use the Touch-link technology to exchange information to further enhance the security, thereby preventing transmission signals from being intercepted.

The embodiments of an electronic transaction that have been described, or certain aspects or portions thereof, may be practiced in logic circuits, or may take the form of program code (i.e., instructions) embodied in tangible media, such as floppy diskettes, CD-ROMS, hard drives, or any other machine-readable storage medium, wherein, when the program codes are loaded into and executed by a machine, such as a smart phone, a mobile phone, or a similar device, the machine becomes an apparatus for practicing the invention. The disclosed methods may also be embodied in the form of program codes transmitted over some transmission medium, such as electrical wiring or cabling, through fiber optics, or via any other form of transmission, wherein, when the program codes are received and loaded into and executed by a machine, the machine becomes an apparatus for practicing the invention. When implemented on a general-purpose processor, the program codes combine with the processor to provide a unique apparatus that operate analogously to specific logic circuits.

Use of ordinal terms such as "first" and "second" in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

While the invention has been described by way of example and in terms of preferred embodiment, it is to be understood that the invention is not limited thereto. On the contrary, it is intended to cover various modifications and similar arrangements (as would be apparent to the skilled in the art). Therefore, the scope of the appended claims should be accorded the broadest interpretation so as to encompass all such modifications and similar arrangements.

## Claims

1. A mobile device, comprising:
a wireless communication unit, configured to transmit a transaction request to a server and receive transaction data from the server;
a touch panel, comprising one transmitting electrode, wherein the transmitting electrode transmits payer data to a receiving electrode of a touch panel device; and
a processing unit, processing a signature on the touch panel to get a signature characteristic, generating the payer data according to the signature characteristic and the transaction data, and providing the payer data to the touch panel,
wherein the payer data is forwarded to the server by the touch panel device and, when the payer data passes verification by the server, the transaction request is approved.

2. The mobile device of claim 1, wherein the transaction data is a hash code generated by applying a hash function on some transaction-specific data.

3. The mobile device of claim 1 or claim 2, wherein the signature characteristic is a track, a speed, a stroke or a strength of the signature.

4. The mobile device of one of the preceding claims, wherein the transaction data is valid for a predetermined time.

5. The mobile device of one of the preceding claims, wherein, prior to transmitting the transaction request to the server, the processing unit further processes another signature on the touch panel to get another signature characteristic and the wireless communication unit transmits the another signature characteristic to the server.

6. The mobile device of one of the preceding claims, wherein the processing unit further receives a key from the server via the wireless communication unit when receiving the transaction data from the server, and uses the key to encrypt the transaction data and the signature characteristic so as to generate the payer data.

7. The mobile device of one of the preceding claims, wherein the wireless communication unit further receives a message from the server indicating whether a payment to the touch panel device is made.

8. The mobile device of one of the preceding claims, wherein the wireless communication unit further transmits a password of a first account to the server prior to transmitting the transaction request to the server.

9. A non-transitory computer readable storage medium having instructions stored therein, which when executed by a mobile device, cause the mobile device to:
transmit, at a wireless communication unit, a transaction request to a server;
receive, at the wireless communication unit, transaction data from the server;
prompt, at a processing unit, a user to sign on a touch panel to obtain a signature characteristic;
generate, at the processing unit, payer data according to the signature characteristic and
the transaction data;
provide, at the processing unit, the payer data to the touch panel; and
transmit, at a transmitting electrode of the touch panel, the payer data to a receiving electrode of a touch panel device,
wherein the payer data is forwarded to the sen-er by the touch panel device and, when the payer data passes verification by the server, the transaction request is approved.

10. A non-transitory computer readable storage medium having instructions stored therein, which when executed by a server, cause the server to:
receive, at a wireless communication unit, a transaction request from a mobile device;
generate, at a processing unit, transaction data according to some transaction-specific data;
transmit, at the processing unit, the transaction data to the mobile device;
receive, at the wireless communication unit, payer data from a touch panel device; and
verify, at the processing unit, the payer data so as to determine whether to approve the transaction request.

11. An electronic transaction method executed by a mobile device comprising a wireless communication unit, a touch panel, and a processing unit, the method comprising:
transmitting, at the wireless communication unit, a transaction request to a server;
receiving, at the wireless communication unit, transaction data from the server;
prompting, at the processing unit, a user to sign on a touch panel to obtain a signature characteristic;
generating, at the processing unit, payer data according to the signature characteristic and the transaction data;
providing, at the processing unit, the payer data to the touch panel; and
transmitting, at a transmitting electrode of the touch panel, the payer data to a receiving electrode of a touch panel device,
wherein the payer data is forwarded to the server by the touch panel device and, when the payer data passes verification by the server, the transaction request is approved.

12. The method of claim 11, wherein the transaction data is a hash code generated by applying a hash function on some transaction-specific data.

13. The method of claim 11 or claim 12, wherein the signature characteristic is a track, a speed, a stroke or a strength of the signature.

14. The method of one of claims 11 to 13, wherein the transaction data is valid for a predetermined time.

15. The method of one of claims 11 to 14, further comprising processing, at the processing unit, another signature on the touch panel to get another signature characteristic and transmitting, at the wireless communication unit, the another signature characteristic to the server prior to transmitting the transaction request to the server.
